# EUROPÄISCHE PATENTSCHRIFT

(11) **EP 4 613 801 B1**
(45) Veröffentlichungstag und Bekanntmachung des Hinweises auf die Patenterteilung: **11.11.2026**
(21) Anmeldenummer: 25161845.0
(22) Anmeldetag: 05.03.2025
(51) Int. Cl.: C08K 5/3465, C08L 75/14, B33Y 10/00, B33Y 70/00, B29C 64/124, B33Y 80/00

(54) **3D DRUCKERZEUGNISSE**
3D PRINTED PRODUCTS
PRODUITS IMPRIMÉS 3D

(30) Priorität: 06.03.2024 EP 24161676
(43) Veröffentlichungstag der Anmeldung: 10.09.2025
(73) Patentinhaber: LANXESS Deutschland GmbH, 50569 Köln (DE)
(72) Erfinder: BORST, Hans-Ulrich, 50189 Elsdorf (DE); JENTSCH, Joerg-Dietrich, 51381 Leverkusen (DE); KISCHKEWITZ, Marvin, 40217 Düsseldorf (DE); MAY, Lars, 40764 Langenfeld (DE)

(56) Entgegenhaltungen:
- EP-A1- 1 661 690
- EP-A1- 3 719 085
- EP-A1- 4 317 232

## Beschreibung

Die vorliegende Erfindung betrifft Urethanacrylatharz basierte 3D Druckerzeugnisse mit einem Farbabstand ΔE <20 von den L*a*b* Koordinaten zu einer mit "3" beginnenden Farbnummer der RAL-Farbtabelle, enthaltend darin gelöst wenigstens einen roten Perinonfarbstoff auszuwählen aus 8,9,10,11-Tetrachlor-12H-phthaloperin-12-on und/oder 14H-Benz[4,5]isoquino[2,1-a]perimidin-14-on, die Verwendung dieser roten Perinonfarbstoffe zur Herstellung von 3D Druckerzeugnissen mit einem Farbabstand ΔE <20 von den L*a*b* Koordinaten zu einer mit "3" beginnenden Farbnummer der RAL-Farbtabelle mittels Fotopolymerisation, sowie ein Verfahren zur Steigerung der Lichtechtheit und der koloristischen Eigenschaften fotopolymerisierbarer, Urethanacrylatharz basierter Zusammensetzungen und darauf basierender 3D Druckerzeugnisse mittels darin gelöst wenigstens eines roten Perinonfarbstoffs auszuwählen aus 8,9,10,11-Tetrachlor-12H-phthaloperin-12-on und/oder 14H-Benz[4,5]isoquino[2,1-a]perimidin-14-on.

### Stand der Technik

Farbmasterbatches enthalten Farbmittel in dispergierter oder gelöster Form. Die Farbe oder der Farbton eines Kunststofferzeugnisses dient unter anderem als Erkennungsmerkmal für Unternehmen oder für ein bestimmtes Produkt, als Schutzkomponente, als Sicherheitsmerkmal oder als funktionelles Additiv. Amorphe Kunststoffe wie Polystyrol, Polycarbonat, Polymethylmethacrylat u. a., deren Transparenz erhalten bleiben soll, bedingen den Einsatz von polymerlöslichen Farbstoffen. Im Gegensatz zu einem Pigment ist ein für den 3D Druck mittels Fotopolymerisation vorgesehenes Farbmittel vorzugsweise im zu verarbeitenden Kunststoffharz löslich und liegt nicht kolloidal vor.

Der 3-D-Druck ist eine Methode der additiven Fertigung. Diese bezeichnet einen Prozess, bei dem auf Basis von digitalen 3D Konstruktionsdaten durch das Ablagern von Material ein Bauteil schichtweise aufgebaut wird. "3D Druck" wird deshalb im Sinne der vorliegenden Erfindung als Synonym für eine additive Fertigung verwendet. Additive Fertigung beschreibt jedoch besser, dass es sich hier um ein Produktionsverfahren handelt, das sich deutlich von konventionellen, abtragenden Fertigungsmethoden unterscheidet. Anstatt zum Beispiel ein Werkstück aus einem festen Block heraus zu fräsen, baut die additive Fertigung Bauteile Schicht für Schicht aus Werkstoffen auf, die beispielsweise als feines Pulver vorliegen. Als Materialien sind unterschiedliche Metalle, Kunststoffe und Verbundwerkstoffe verfügbar.

Der 3D Druck hat als Fertigungsmethode inzwischen in zahlreichen Bereichen und Branchen Einzug gehalten. Beim Bau von Anschauungs- und Funktionsprototypen, Klein- und Mittelserien und auch zunehmend in der Serienfertigung überzeugt dieses Verfahren mit Vorteilen, die mit anderen, konventionellen Methoden nicht erreicht werden können. So lassen sich Produktentwicklung und Markteinführung entscheidend verkürzen, Produktindividualisierungen oder Funktionsintegration gelingen in kürzerer Zeit - und das oftmals zu geringeren Kosten. Die additive Fertigung mittels 3D Druck eröffnet somit großen Originalausrüstungsherstellern (OEMs) aus unterschiedlichsten Industriezweigen die Möglichkeit, sich am Markt zu differenzieren - im Hinblick auf neue Kundennutzen, Kostenreduktionspotenziale und Nachhaltigkeitsziele. Beim 3D Druck werden 3D Druckerzeugnisse gedruckt, indem ein für die entsprechende Drucktechnik geeignetes Material automatisiert Schicht für Schicht selektiv in die gewünschte Form gebracht wird. Ein Originalausrüstungshersteller oder OEM ist ein Hersteller von Komponenten oder Produkten, der diese nicht selber in den Einzelhandel bringt; der Begriff "OEM" (im Gegensatz zu "Erstausrüster") wird in der Automobilindustrie synonym mit einem Fahrzeughersteller verwendet.

Für Kunststoffe gibt es unterschiedliche 3D-Druckverfahren. Darunter gibt es Verfahren, in denen der Kunststoff erst während des Druckens durch Aushärten erzeugt wird. Eine Ausführungsform ist der auf Fotopolymerisation basierende 3D Druck worin eine fotohärtende Harzflüssigkeit schichtweise aufgetragen und mittels Licht einem Fotohärtungsprozess bzw. einer Polymerisation oder einer lichtinduzierten Härtung unterzogen wird. Die selektive schichtweise Aushärtung des flüssigen Harzes erfolgt durch eine räumlich begrenzte, genau definierte, computergesteuerte Belichtung des Harzes mit Licht innerhalb eines für den Initiationsprozess der Fotopolymerisation geeigneten Spektralbereichs. Geeignet sind insbesondere UV-Licht, sichtbares Licht oder Infrarotlicht. Erfindungsgemäße, auf Fotopolymerisation beruhende 3D Druckverfahren sind vorzugsweise die Stereolithographie (SLA) und das Digital Light Processing (DLP). Der Aufbau entsprechender Geräte besteht bei beiden 3D-Druckvarianten aus einer Lichtquelle wobei die Belichtung von oben oder unten möglich ist, sogenannter "top-down" oder "bottom-up" Druck, einem Harz-Reservoir und einer Plattform, auf der die schichtweise Aushärtung des für den 3D Druck einzusetzenden Kunststoffharzes erfolgt. Beim SLA 3D Druck wird mit einem Laserstrahl punktweise durch Abrastern die auszuhärtende Fläche belichtet, beim DLP-Verfahren erfolgt die Belichtung über die gesamte zu belichtende Fläche, insbesondere mit einem LCD panel, wobei LCD für Liquid Crystal Display steht. Während eines typischen Druckvorganges wird die Druckplattform in das Harz im Harzreservoir eingetaucht, während das Belichtungsprogramm abläuft und eine Schicht erzeugt. Die wiederholte Erzeugung der Schichten ergibt schließlich das 3D Druckerzeugnis. Beim SLA Verfahren erzeugt ein Stereolithografiedrucker mittels Laser das 3D Druckerzeugnis. Aufgetragen wird dabei eine Kunststofflösung, die unter UV-Licht aushärtet. Entsprechende 3D Drucker werden als SLA-3D-Drucker bzw. DLP-3D-Drucker bezeichnet. Ein Vergleich der beiden Technologien sowie Anbieter entsprechender 3D Drucker findet sich im Übersichtsartikel: 3Dnatives, Regina P. 8. April 2021 unter https://www.3dnatives.com/de/sla-vs-dlp-3d-druck-080420211/

US 2011/0070976 A1 beschreibt einen Golfball, der aus einem Kern, mindestens einer den Kern umhüllenden Schicht und einer auf der Oberfläche der äußersten Schicht der Hülle aufzubringenden Farbschicht mit fluoreszierendem Pigment besteht. Die äußerste Schicht kann auf einem thermoplastischen Polyurethanmaterial bestehen (Pandex^{®} T8290 oder Pandex^{®} T8283). Für die auf die äußerste Schicht aufzutragende Farbschicht werden in den Beispielen als rote, fluoreszierende Anthrachinonfarbstoffe Solvent Red 149 (Sumiplast^{®} Red HFG) und Solvent Red 150 (Sumiplast^{®} HF4G) eingesetzt. Der Ball verfügt über eine hervorragende Spinleistung und Haltbarkeit, ein Erscheinungsbild, das sich durch hervorragende Sichtbarkeit, Stil und Luxus auszeichnet, sowie eine hervorragende Wetterbeständigkeit.

US 2019/0201171 A1 offenbart gefärbte, härtbare Zusammensetzungen zur Verwendung in einem additiven Fertigungsprozess, wobei die Zusammensetzung folgendes umfasst: eine härtbare Harzzusammensetzung, umfassend strahlungshärtbare Komponenten, einen Photoinitiator und eine Farbstoffzusammensetzung umfassend einen Farbstoff D1 und einen Farbstoff D2, wobei Farbstoff D1 ein Lichtabsorptionsmaximum innerhalb eines Wellenlängenbereichs von 400 bis 530 nm aufweist und Farbstoff D2 ein Lichtabsorptionsmaximum innerhalb eines Wellenlängenbereichs von 540 bis 650 nm zeigt. Als Beispiel werden zwei Anthrachinonfarbstoffe eingesetzt, C.I. Solvent Red 111, CAS No. 82-38-2 (dye 1) und C.I. Solvent Violet 13, CAS No. 81-48-1 (dye 2). Beschrieben wird ferner ein S30 3D-Printer (Rapid Shape GmbH, Heimsheim, Germany unter Anwendung eines LED-Lichts mit 405 nm Wellenlänge, mit 50 mW/cm² Intensität für 11 sec. pro aufzutragender Schicht.

Neben vorteilhaften Farbeigenschaften während und unmittelbar nach dem Herstellungsprozess eines 3D Druckerzeugnisses mittels Fotopolymerisation sind auch die Eigenschaften in der Verwendung solcher 3D Druckerzeugnisse zu beachten. Die im oben genannten Stand der Technik eingesetzten Farbmittel haben sich als unvorteilhaft erwiesen, weil es zu Farbänderungen durch die infolge der Fotopolymerisation erforderliche Lichteinwirkung im 3D Fertigungsprozess kommt. Die Empfindlichkeit gegenüber Licht, bzw. die Lichtechtheit, ist allerdings ein Qualitätsmerkmal für gefärbte 3D Druckerzeugnisse die mittels eines auf Fotopolymerisation basierenden 3D Drucks hergestellt werden. Möglichst vermieden werden soll ein Verblassen oder Verfärben bis hin zu einer Verbräunung eines 3D Druckerzeugnisses, das durch Fotopolymerisation basierten 3D Druck hergestellt wird.

Zudem sollen für den 3D Druck vorgesehene Farbmittel während der Fotopolymerisation, vorzugsweise nach dem SLA- oder DLP-Verfahren, ihre vorteilhaften anwendungstechnischen Eigenschaften beibehalten und dürfen nicht die Härtung/Polymerisation des 3D Druckerzeugnisses beeinträchtigen oder sogar unterbinden. Vorteilhafte anwendungstechnische Eigenschaften im Sinne der vorliegenden Erfindung sind bei den erfindungsgemäß für den 3D Druck zu definierenden Farbstoffen die Einstellung eines gewünschten bzw. definierten Farbtons und die Einstellung einer reinen, brillanten Farbe.

Aufgabe der vorliegenden Erfindung ist deshalb die Bereitstellung roter Farbstoffe für den 3D Druck mittels Fotopolymerisation, insbesondere nach dem SLA- oder DLP-Verfahren, die es durch ihre Löslichkeit im zu verarbeitenden Kunststoff erlauben, einen definierten roten Farbton einzustellen, während des Druckverfahrens lichtecht bleiben und zudem ihre koloristischen Eigenschaften im Vergleich zum Solvent Red 111, wie es in US 2019/0201171 A1 eingesetzt wird, beibehalten, was im Rahmen der vorliegenden Erfindung als Steigerung der der nach **DIN EN ISO 4892-2** zu bestimmenden Lichtechtheit und koloristischen Eigenschaften bezeichnet wird.

### Methode zur Bewertung der Lichtechtheit

Zur Bestimmung der Lichtechtheit von Farbstoffen für den auf Fotopolymerisation basierenden 3D Druck werden im Rahmen der vorliegenden Erfindung Prüfkörper in Form eines Quaders aus eingefärbtem Harz mit den Abmessungen Länge = 60 mm, Breite = 40 mm und Höhe = 2 mm mit einer Farbstoffkonzentration von 0,02% im Harz hergestellt. Diese Prüfkörper werden anschließend im druckfrischen Zustand nach **DIN EN ISO 4892-2** mit Hilfe des Gerätes Xenotest Beta+ (Atlas Material Testing Technology GmbH, Linsengericht-Altenhaßlau, Deutschland) 95 - 100 h lang belichtet (Xenon Lampe). Die Bewertung der Lichtechtheit erfolgt farbmetrisch, indem mit einem Kugelspektralfotometer X-Rite Ci7800 (X-Rite GmbH, Planegg-Martinsried, Deutschland) Transmissionsspektren der belichteten Prüfkörper aufgenommen werden, wobei folgende Einstellungen gewählt werden: Messgeometrie = d/8°; Spektralintervall = 10 nm; Spektralbereich = 360 - 750 nm. Aus den dabei erhaltenen Transmissionsspektren werden mit folgenden Einstellungen anschließend die farbmetrischen Daten mit der Herstellersoftware des Kugelspektralfotometers berechnet: Lichtquelle/Beobachter = D65 / 10°; Farbraum = L*a*b*C*h°. Als Bewertungsgrundlage der Lichtechtheit werden die Farbabstände, angegeben als ΔE im L*a*b*C*h° Farbraum, zwischen belichteten Prüfkörpern und den entsprechenden nicht belichteten Prüfkörpern herangezogen. Je größer der Farbabstand ist, desto größer ist die Änderung des Farbeindruckes infolge des Einflusses der Belichtung und damit ist die Lichtechtheit umso schlechter. Zur Einordnung des ΔE wird ein Vergleich mit anderen Farbstoffen mit ähnlichem Farbton, sogenannte nicht erfindungsgemäße Beispiele, deren Lichtechtheit in anderen Anwendungen, insbesondere in der Kunststoff Massefärbung, laut Herstellerangaben allgemein als gut bewertet wird, herangezogen.

### Methode zur Bewertung der Stabilität der koloristischen Eigenschaften

Um die Änderung der spektralen Eigenschaften, die die koloristischen Eigenschaften eines Farbstoffes bestimmen, zu ermitteln, werden im Rahmen der vorliegenden Erfindung die Absorptionsspektren vor und nach der lichtinduzierten Aushärtung der zu untersuchenden, eingefärbten Harze verglichen.

Die, wie im obigen Abschnitt "Methode zur Bewertung der Lichtechtheit" beschrieben, hergestellten eingefärbten Harze werden dazu in eine Quarzglasküvette mit einer Breite von 1 cm gefüllt und die Absorptionsspektren in Transmission mit dem Gerät x-Rite Ci7800 (X-Rite GmbH, Planegg-Martinsried, Deutschland) im Wellenlängenbereich von 360 bis 750 nm aufgenommen. Diese Absorptionsspektren werden danach um die Absorption des entsprechenden, nicht eingefärbten Harzes korrigiert, indem dieselbe Messung mit dem nicht eingefärbten Harz durchgeführt wird. Analog dazu werden die Absorptionsspektren in Transmission von den eingefärbten Prüfkörpern aufgenommen und korrigiert und die Spektren jeweils auf die Schichtdicke der Küvette bzw. des zu untersuchenden Prüfkörpers normiert.

Schließlich wird die Ähnlichkeit der Absorptionsspektren vor und nach dem 3D Druck aus den Messdaten berechnet, indem man den Korrelationskoeffizient R der normierten Absorption (Spektralintervall 10 nm) berechnet. Je größer R ist, desto größer ist die Ähnlichkeit der Absorptionsspektren und desto stabiler sind die koloristischen Eigenschaften eines für Fotopolymerisation basierten 3D Druck vorgesehenen bzw. im Sinne der vorliegenden Erfindung geeigneten Farbstoffs.

### Erfindung

Lösung der Aufgabe und Gegenstand der vorliegenden Erfindung sind **3D Druckerzeugnisse** mit einem Farbabstand ΔE <20 von den L*a*b* Koordinaten einer mit "3" beginnenden Farbnummer der RAL-Farbtabelle basierend auf fotopolymerisierbaren Zusammensetzungen enthaltend wenigstens ein Urethanacrylatharz und wenigstens einen darin gelösten roten Perinonfarbstoff auszuwählen aus 8,9,10,11-Tetrachlor-12H-phthaloperin-12-on und/oder 14H-Benz[4,5]isoquino[2,1-a]perimidin-14-on.

Gegenstand der vorliegenden Erfindung ist auch die **Verwendung** wenigstens eines roten Perinonfarbstoffs auszuwählen aus 8,9,10,11-Tetrachlor-12H-phthaloperin-12-on und/oder 14H-Benz[4,5]isoquino[2,1-a]perimidin-14-on gelöst vorliegend zur Steigerung der nach **DIN EN ISO 4892-2** zu bestimmenden Lichtechtheit und koloristischen Eigenschaften fotopolymerisierbarer, Urethanacrylatharz-basierter Zusammensetzungen und daraus herzustellender 3D Druckerzeugnisse mit einem Farbabstand ΔE <20 von den L*a*b* Koordinaten zu einer mit "3" beginnenden Farbnummer der RAL-Farbtabelle. Die Steigerung der Lichtechtheit und der koloristischen Eigenschaften wird durch Aufnahme von Transmissionsspektren vor und nach der lichtinduzierten Aushärtung von Prüfkörpern entsprechend eingefärbter Urethanacrylatharze mit einem Kugelspektralfotometer gemessen, danach um die Absorption des entsprechenden, nicht eingefärbten Harzes korrigiert und auf die Schichtdicke der Küvette bzw. des zu untersuchenden Prüfkörpers normiert sowie schließlich die Ähnlichkeit der Absorptionsspektren vor und nach dem 3D Druck aus den Messdaten ermittelt, indem man den Korrelationskoeffizient R der normierten Absorption berechnet.

Die Erfindung betrifft ferner ein **Verfahren** zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "3" beginnenden Farbnummer der RAL-Farbtabelle, indem wenigstens ein roter Perinonfarbstoff auszuwählen aus 8,9,10,11-Tetrachlor-12H-phthaloperin-12-on und/oder 14H-Benz[4,5]isoquino[2,1-a]perimidin-14-on im Urethanacrylatharz gelöst ist. Die Steigerung der Lichtechtheit und der koloristischen Eigenschaften wird durch Aufnahme von Transmissionsspektren vor und nach der lichtinduzierten Aushärtung von Prüfkörpern entsprechend eingefärbter Urethanacrylatharze mit einem Kugelspektralfotometer gemessen, danach um die Absorption des entsprechenden, nicht eingefärbten Harzes korrigiert und auf die Schichtdicke der Küvette bzw. des zu untersuchenden Prüfkörpers normiert sowie schließlich die Ähnlichkeit der Absorptionsspektren vor und nach dem 3D Druck aus den Messdaten ermittelt, indem man den Korrelationskoeffizient R der normierten Absorption berechnet.

Die Erfindung betrifft schließlich auch ein **Verfahren** zur additiven Fertigung von 3D Druckerzeugnissen mit einem Farbabstand ΔE <20 von den L*a*b* Koordinaten zu einer mit "3" beginnenden Farbnummer der RAL-Farbtabelle indem Urethanacrylatharz-basierte Zusammensetzungen enthaltend gelöst wenigstens einen roten Perinonfarbstoff auszuwählen aus 8,9,10,11-Tetrachlor-12H-phthaloperin-12-on und/oder 14H-Benz[4,5]isoquino[2,1-a]perimidin-14-on in einem auf Fotopolymerisation basierten SLA-3D-Drucker oder DLP-3D-Drucker eingesetzt werden.

Die im Rahmen dieser Anmeldung genannten Normen beziehen sich auf die zum Anmeldetag dieser Erfindung geltenden Fassung, sofern nicht anders angegeben. Bei Prozentangaben handelt es sich, sofern nicht anders angegeben, um Gewichtsprozente.

### Tab.1 RAL-Farbtabelle

Im Rahmen der vorliegenden Erfindung gilt beispielsweise als Rot eine Farbe, die im RAL Farbsystem nach **https://de.wikipedia.org/wiki/RAL-Farbe#Rot** in der RAL Farbtabelle eine Farbnummer hat, die mit einer "3" beginnt. Im Einzelnen unterscheidet man zum Anmeldetag der vorliegenden Erfindung Rottöne wie folgt:

| | | L* | a* | b* |
|---|---|---|---|---|
| RAL 3000 | Feuerrot | 44 | 50 | 39 |
| RAL 3001 | Signalrot | 41 | 49 | 33 |
| RAL 3002 | Karminrot | 41 | 49 | 35 |
| RAL 3003 | Rubinrot | 36 | 47 | 27 |
| RAL 3004 | Purpurrot | 31 | 38 | 18 |
| RAL 3005 | Weinrot | 26 | 33 | 15 |
| RAL 3007 | Schwarzrot | 23 | 17 | 7 |
| RAL 3009 | Oxidrot | 29,27 | 24,59 | 16,51 |
| RAL 3011 | Braunrot | 34,52 | 28,66 | 13,44 |
| RAL 3012 | Beigerot | 63,81 | 20,79 | 20,45 |
| RAL 3013 | Tomatenrot | 40,70 | 36,67 | 21,37 |
| RAL 3014 | Altrosa | 60,17 | 32,49 | 12,58 |
| RAL 3015 | Hellrosa | 71,23 | 21,59 | 4,98 |
| RAL 3016 | Korallenrot | 44,70 | 37,92 | 23,96 |
| RAL 3017 | Rosé | 54,24 | 44,26 | 16,87 |
| RAL 3018 | Erdbeerrot | 50,77 | 49,15 | 19,86 |
| RAL 3020 | Verkehrsrot | 46 | 59 | 54 |
| RAL 3022 | Lachsrot | 56,06 | 38,90 | 29,70 |
| RAL 3024 | Leuchtrot | 51,32 | 82,52 | 71,62 |
| RAL 3026 | Leuchthellrot | 59 | 70 | 59 |
| RAL 3027 | Himbeerrot | 43,07 | 46,96 | 15,81 |
| RAL 3028 | Reinrot | 51 | 58 | 46 |
| RAL 3031 | Orientrot | 46 | 45 | 25 |
| RAL 3032 | Perlrubinrot | 26,88 | 41,34 | 19,40 |
| RAL 3033 | Perlrosa | 44,29 | 45,11 | 28,62 |

Dargestellt sind in hier die für Rot geräteunabhängigen CIE L*a*b* Farbwerte für den jeweiligen RAL Wert: L* steht für die Luminanz, a* beschreibt den Farbort bezüglich der Rot-Grün-Achse und b* beschriebt den Farbort bezüglich der Gelb-Blau-Achse unter Verwendung von D65 Normlicht mit einem 10° Sichtfeld eines Normalbeobachters. Das Farbmodell ist in der **EN ISO 11664-4** "Colorimetry - Part 4: CIE 1976 L*a*b* Colour space" genormt. Zu L*a*b*-Farbraum (auch: CIELAB) siehe: **https://de.wikipedia.org/wiki/Lab-Farbraum.** Jede Farbe im Farbraum ist durch einen Farbort mit den kartesischen Koordinaten {L*, a*, b*} definiert. Die a*b*-Koordinatenebene wurde in Anwendung der Gegenfarbentheorie konstruiert. Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte (dem Koordinatenursprung a*=0, b*=0) liegen alle unbunten Farben.

Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen.

Die a*-Werte reichen von ca. -170 bis +100, die b*-Werte von -100 bis +150, wobei die Maximalwerte nur bei mittlerer Helligkeit bestimmter Farbtöne erreicht werden. Der CIELAB-Farbkörper hat im mittleren Helligkeitsbereich seine größte Ausdehnung, die aber je nach Farbbereich unterschiedlich in Höhe und Größe ist.

Erfindungsgemäß umfasst sind aber auch zu Rot ähnliche Farbtöne die einen Farbabstand ΔE <20 von den L*a*b* Koordinaten zu einer mit "3" beginnenden Farbnummer der RAL-Farbtabelle für die Farbe Rot aufweisen.

### Bevorzugte Ausführungsformen der Erfindung

Vorzugsweise weisen die erfindungsgemäß einzusetzenden, fotopolymerisierbaren Urethanacrylatharz-basierten Zusammensetzungen und daraus herzustellender 3D Druckerzeugnisse einen Farbabstand ΔE <10 von den L*a*b* Koordinaten zu einer mit "3" beginnenden Farbnummer der RAL-Farbtabelle für die Farbe Rot auf.

Besonders bevorzugt weisen die erfindungsgemäß einzusetzenden, fotopolymerisierbaren Urethanacrylatharz-basierten Zusammensetzungen und daraus herzustellender 3D Druckerzeugnisse einen Farbabstand ΔE <5 von den L*a*b* Koordinaten zu einer mit "3" beginnenden Farbnummer der RAL-Farbtabelle für die Farbe Rot auf.

Vorzugsweise betrifft die Erfindung 3D Druckerzeugnisse mit einem Farbabstand ΔE <20 von den L*a*b* Koordinaten einer mit "3" beginnenden Farbnummer der RAL-Farbtabelle basierend auf fotopolymerisierbaren Zusammensetzungen für die **additive Fertigung von Erzeugnissen mittels 3D Druck,** enthaltend wenigstens ein Urethanacrylat Basisharz und darin gelöst wenigstens einen roten Perinonfarbstoff auszuwählen aus 8,9,10,11-Tetrachlor-12H-phthaloperin-12-on und/oder 14H-Benz[4,5]isoquino[2,1-a]perimidin-14-on.

Vorzugsweise betrifft die Erfindung ein Verfahren zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten einer mit "3" beginnenden Farbnummer der RAL-Farbtabelle **mittels additiver Fertigung im 3D Druck,** indem wenigstens ein roter Perinonfarbstoff auszuwählen aus 8,9,10,11-Tetrachlor-12H-phthaloperin-12-on und/oder 14H-Benz[4,5]isoquino[2,1-a]perimidin-14-on im Urethanacrylatharz gelöst eingesetzt wird.

Vorzugsweise betrifft die Erfindung die Verwendung wenigstens eines roten Perinonfarbstoffs auszuwählen aus 8,9,10,11-Tetrachlor-12H-phthaloperin-12-on und/oder 14H-Benz[4,5]isoquino[2,1-a]perimidin-14-on gelöst in und zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus zu generierender 3D Druckerzeugnisse mit einem Farbabstand ΔE <20 von den L*a*b* Koordinaten einer mit "3" beginnenden Farbnummer der RAL-Farbtabelle **mittels additiver Fertigung im 3D Druck.**

Vorzugsweise betrifft die Erfindung 3D Druckerzeugnisse, die erfindungsgemäße Verwendung, sowie ein erfindungsgemäßes Verfahren zur Steigerung der Lichtechtheit und koloristischen Eigenschaften von 3D Druckerzeugnissen, worin auf 20 bis 99,995 Massenanteile Urethanacrylat basiertem Harz, das vorzugsweise wenigstens ein Additiv enthält, 0,005 bis 5 Massenanteile des wenigstens einen roten Perinonfarbstoffs, auszuwählen aus 8,9,10,11-Tetrachlor-12H-phthaloperin-12-on und/oder 14H-Benz[4,5]isoquino[2,1-a]perimidin-14-on, gelöst vorliegen. Vorzugsweise beträgt die Löslichkeit der roten Perinonfarbstoffe im Urethanacrylat basierten Harz gemäß **DIN EN ISO 7579:2010 DE** bei mindestens 0,05 g/L bei 23°C.

Besonders bevorzugt werden zusätzlich zum wenigstens einen roten Perinonfarbstoff noch 0,5 - 10 Massenanteile Fotoinitiator, der vorzugsweise im Wellenlängenbereich von 300 bis 450 nm absorbiert, eingesetzt.

Ganz besonders bevorzugt werden zusätzlich zum wenigstens einen roten Perinonfarbstoff und zu den 0,5 - 10 Massenanteilen Fotoinitiator 0,001 - 1 Massenanteile wenigstens eines Additivs eingesetzt, wobei bevorzugte Additive im Sinne der vorliegenden Erfindung wenigstens ein Egalisiermittel, wenigstens ein Stabilisator, wenigstens ein zusätzlicher Farbstoff verschieden von 8,9,10,11-Tetrachlor-12H-phthaloperin-12-on oder 14H-Benz[4,5]isoquino[2,1-a]perimidin-14-on, wenigstens ein Füllstoff oder wenigstens ein organisches Pigment ist.

### Urethanacrylatbasierte Harze

Erfindungsgemäß bevorzugte, fotopolymerisierbare Urethanacrylatbasierte Harze, insbesondere für die mittels Fotopolymerisation durchzuführende additive Fertigung im 3D Druck, basieren auf Polyurethanacrylat [CAS No. 82116-59-4], Polyetherurethanacrylat oder Urethanacrylatharzen. Verwiesen sei auf WO 2005/028532 A1**,** RU2546966C1 **oder** M. Alishiri et al., Materials Science and Engineering: C, Vol. 42, September 2014, S. 763-773**.**

Im Rahmen der vorliegenden Erfindung wurden eingesetzt und sind daher besonders bevorzugt:
"3D Printing UV Sensitive Resin Clear" der Shenzhen Anycubic Technology Co., Ltd, China; ein farbloses Harz für den lichtinduzierten 3D Druck mit hoher Druckgeschwindigkeit enthaltend 30 - 60 % Polyurethanacrylate CAS No. 82116-59-4; 10 - 40 % Isooctylacrylat CAS No. 29590-42-9; 2 - 5 % Fotoinitiator;
"Addigy^{®} LPU Rigid 341-02 IM" der Covestro Deutschland AG, Leverkusen, Deutschland; ein farbloses aliphatisches Polyetherurethanacrylatharz für den lichtinduzierten 3D Druck, optimiert für hohe mechanische Beanspruchung und Festigkeit (< 25 % Isobornylmethacrylat CAS 7534-94-3; ca. 10 % 4-(1-Oxo-2-propenyl)morpholin CAS No. 5117-12-4; < 0,15 % Methacrylsäure CAS No. 79-41-4 / 2-Hydroxyethylmethacrylat CAS No. 868-77-9);
"Ultracur3D^{®} FL 300" der BASF 3D Printing Solutions GmbH, Ludwigshafen, Deutschland; ein farbloses reaktives Urethanacrylatharz für den lichtinduzierten 3D Druck, optimiert für hohe Torsionsflexibilität und hohe Reißfestigkeit (1 - 3 % Diphenyl(2,4,6-trimethylbenzoyl)phosphinoxid CAS No. 75980-60-8; 15 - 20 % Isodecylacrylat CAS No. 1330-61-6; 5 - 10 % exo-1,7,7-Trimethylbicyclo[2.2.1]hept-2-ylacrylat CAS No. 5888-33-5; 25 - 50 % 2-Oxazolidinone, 3-ethenyl-5-methyl- CAS No. 3395-98-0).

Erfindungsgemäß einzusetzende fotopolymerisierbare Harze enthalten vorzugsweise neben dem wenigstens einen roten Perinonfarbstoff in der Regel ein Gemisch aus wenigstens einem polymerisierbaren Acrylatmonomer und/oder Präpolymerisat, vorzugsweise ein (Poly-)urethan-Acrylat, wenigstens einen Fotoinitiator und wenigstens ein Additiv. Im Hinblick auf solche Zusatzstoffe sei prinzipiell auf WO 2018/038954 A1 verwiesen, deren Inhalt von der vorliegenden Beschreibung vollumfänglich umfasst ist. Nachstehend werden bevorzugt einzusetzende Fotoinitiatoren und Additive aufgeführt.

### Fotoinitiator

Ein erfindungsgemäß einzusetzender Fotoinitiator ist in der Regel durch eines oder mehrere der folgenden Merkmale gekennzeichnet,
- mit Lichtabsorptionsband(en) in einem Wellenlängenbereich von 300 bis 450 nm und/oder einer Löslichkeit in der härtbaren Zusammensetzung von mindestens 2 g/l bei 23 °C;
- einer Löslichkeit in den strahlenhärtbaren Komponenten der härtbaren Harzzusammensetzung und/oder in den gegebenenfalls anwesenden Additiv(en);
- einer Fähigkeit eine Polymerisationsreaktion-einleitende Spezies zu bilden, wenn er Lichtenergie mit einer Wellenlänge zwischen 300 und 450 nm ausgesetzt wird, z.B. durch freie Radikale.

Erfindungsgemäß insbesondere bevorzugt wird wenigstens ein Fotoinitiator aus der Reihe 2-Hydroxy-2-methyl-1-phenylaceton, 1-Hydroxycyclohexylphenylketon, 2,4,6-Trimethylbenzoyl-Diphenylphosphinoxid, Phenylbis(2,4,6-Trimethylbenzoyl)phosphin-oxid, Ethyl-2,4,6-trimethylbenzoylphenylphosphinat eingesetzt.

### Additive

Eine erfindungsgemäß für den 3D Druck einzusetzende fotopolymerisierbare Harzzusammensetzung kann vorzugsweise wenigstens ein Additiv, Stabilisator(en) oder Mischungen davon, enthalten.

Insbesondere kann die Zugabe von Stabilisator(en) zur härtbaren Zusammensetzung dazu beitragen, die Auflösung und Genauigkeit des SLA-Prozesses zu verbessern, indem unerwünschte Streueffekte abgeschwächt oder vermieden werden, sowie um die Haltbarkeit der härtbaren Zusammensetzung zu verlängern. Solche Stabilisatoren enthalten häufig eine Phenoleinheit. Bevorzugt sind p-Methoxyphenol (MOP), Hydrochinonmonomethylether (MEHQ), 2,6-Di-tert-butyl-4-methyl-phenol (BHT; lonol), Phenothiazin, 2,2,6,6-Tetramethyl-piperidin-1-oxyl (TEMPO) oder deren Mischungen. Solche Stabilisator(en) werden vorzugsweise in folgenden Mengen eingesetzt:
- Untere Menge: mindestens 0,001 Gew.-%, oder mindestens 0,005 Gew.-%, oder mindestens 0,01 Gew.-%;
- Obermenge: höchstens 0,02 Gew.-% oder höchstens 0,05 Gew.-%, oder höchstens 0,5 Gew.-%, oder höchstens 1 Gew.-%;
- Bereich: von 0,001 bis 1 Gew.-%, oder von 0,005 bis 0,05 Gew.-%;
wobei die Gew.-% sich auf das Gewicht der härtbaren Zusammensetzung beziehen.

### Perinonfarbstoffe

Die erfindungsgemäß einzusetzenden roten Perinonfarbstoffe auszuwählen aus 8,9,10,11-Tetrachlor-12H-phthaloperin-12-on und/oder 14H-Benz[4,5]isoquino[2,1-a]perimidin-14-on zeichnen sich durch die folgenden Merkmale aus:
- Molekulargewicht im Bereich von 50 bis 1.000 g/mol
- Löslichkeit in der zu härtenden und für den 3D Druck einzusetzenden, Urethanacrylat basierten Harzzusammensetzung zu mindestens 0,05 g/L bei 23°C
- Lichtabsorptionsmaximum in einem Wellenlängenbereich von 400 bis 530 nm
- sehr gute Lichtechtheit im 3D Objekt
- hohe Stabilität der koloristischen Eigenschaften gegenüber dem Härtungsprozess
- beinhalten wenigstens eine Perinoneinheit.

8,9,10,11-Tetrachlor-12H-phthaloperin-12-on ist bekannt als Solvent Red 135, CAS No. 20749-68-2 und bei der LANXESS Deutschland GmbH, Köln, Germany erhältlich.

14H-Benz[4,5]isoquino[2,1-a]perimidin-14-on ist bekannt als Solvent Red 179, CAS No. 6829-22-7 und ebenfalls bei der LANXESS Deutschland GmbH, Köln, Germany erhältlich.

### DIN EN ISO 7579:2010 DE

Diese Internationale Norm legt zwei Verfahren zur Bestimmung der Löslichkeit von Farbstoffen in organischen Lösemitteln fest. Sie sind anwendbar auf Farbstoffe, die sich chemisch unter dem Einfluss des Lösemittels nicht verändern und unter den festgelegten Trocknungsbedingungen beständig und nicht flüchtig sind. Für niedrigsiedende Lösemittel (niedriger 120°C) wird ein gravimetrisches und für hochsiedende Lösemittel (höher 120°C) ein photometrisches Verfahren empfohlen. Die jeweilige Auswahl sollte problemspezifisch getroffen werden. Die Verfahren sind vornehmlich für Konzentrationen zwischen 1 g und 1000 g Farbstoff je Liter Lösemittel geeignet, können jedoch auch zur Bestimmung höherer Löslichkeiten eingesetzt werden, sofern beim gravimetrischen Verfahren die Viskosität der Prüfansätze nicht so hoch ansteigt, dass die beschriebenen Homogenisations- und Zentrifugationsverfahren versagen. Die Löslichkeit des erfindungsgemäß einzusetzenden wenigstens einen roten Perinonfarbstoffs in der zu härtenden und für den 3D Druck einzusetzenden, Urethanacrylat basierten Harzzusammensetzung liegt vorzugsweise gemäß **DIN EN ISO 7579:2010 DE** bei mindestens 0,05 g/L bei 23°C.

Das Verfahren zur Steigerung der nach **DIN EN ISO 4892-2** zu bestimmenden Lichtechtheit und koloristischen Eigenschaften fotopolymerisierbarer, Urethanacrylatharz basierter Zusammensetzungen wird vorzugsweise in der additiven Fertigung mittels Fotopolymerisation von 3D Druckerzeugnissen, vorzugsweise in der additiven Fertigung von 3D Druckerzeugnissen mittels eines auf Fotopolymerisation basierten SLA-3D-Druckers oder DLP-3D-Druckers, angewandt.

Deshalb betrifft die vorliegende Erfindung zudem auch ein Verfahren zur additiven Fertigung von 3D Druckerzeugnissen mit einem Farbabstand ΔE <20 von den L*a*b* Koordinaten zu einer mit "3" beginnenden Farbnummer der RAL-Farbtabelle, indem Urethanacrylatharz-basierte Zusammensetzungen enthaltend wenigstens einen roten Perinonfarbstoff auszuwählen aus 8,9,10,11-Tetrachlor-12H-phthaloperin-12-on und/oder 14H-Benz[4,5]isoquino[2,1-a]perimidin-14-on in einem auf Fotopolymerisation basierten SLA-3D-Drucker oder DLP-3D-Drucker eingesetzt wird.

### BEISPIELE

### Methode zur Bestimmung der Lichtechtheit von Farbstoffen in 3D Drucken

Zur Bestimmung der Lichtechtheit von Farbstoffen in 3D Drucken wurden im Rahmen der vorliegenden Erfindung Prüfkörper aus eingefärbtem Harz mit einer Farbstoffkonzentration von 0,02 Gew.-% im Harz hergestellt. Als Prüfkörper wurde ein Quader mit den folgenden Abmessungen mittels 3D Druck aus eingefärbtem Harz hergestellt.
- Länge 60 mm
- Breite 40 mm
- Höhe 2 mm

Die Prüfkörper wurden nach **DIN EN ISO 4892-2** mit Hilfe des Gerätes Xenotest Beta+ (Atlas Material Testing Technology GmbH, Linsengericht-Altenhaßlau, Deutschland) 95 - 100 h lang belichtet (Xenon Lampe).

Die Bewertung der Lichtechtheit erfolgte farbmetrisch. Dazu wurden mit dem Kugelspektralfotometer X-Rite Ci7800 (X-Rite GmbH, Planegg-Martinsried, Deutschland) Transmissionsspektren der belichteten Prüfkörper aufgenommen. Dabei wurden folgende Einstellungen gewählt:

| | | |
|---|---|---|
| • | Messgeometrie | d/8° |
| • | Spektralintervall | 10 nm |
| • | Spektralbereich | 360 - 750 nm |

Aus den Transmissionsspektren wurden mit folgenden Einstellungen die farbmetrischen Daten mit der Herstellersoftware des Kugelspektralfotometers berechnet:

| | | |
|---|---|---|
| • | Lichtquelle/Beobachter | D65 / 10° |
| • | Farbraum | L*a*b*C*h° |

Als Bewertungsgrundlage der Lichtechtheit wurden die Farbabstände, angegeben als ΔE im L*a*b*C*h° Farbraum zwischen belichteten Prüfkörpern und den entsprechenden nicht belichteten Prüfkörper herangezogen. Je größer der Farbabstand und damit das ΔE war, desto größer war die Änderung des Farbeindruckes in Folge des Einflusses der Belichtung und damit war die Lichtechtheit umso schlechter. Zur Einordnung des ΔE wurde ein Vergleich mit nicht erfindungsgemäßen roten Farbstoffen (siehe nicht erfindungsgemäße Beispiele), deren Lichtechtheit in anderen Anwendungen (z.B. Kunststoff Massefärbung) laut Herstellerangaben allgemein als gut bewertet wird, herangezogen.

**Tab.2: Bewertung der Lichtechtheit**

| **ΔE nach Belichtung in % *** | | **Bewertung** | **Kürzel** |
|---|---|---|---|
| ≤ 10 | | Exzellent | A |
| > 10 - 25 | | Sehr gut | B |
| > 25 - 50 | | Befriedigend | C |
| > 50 - 100 | | Mäßig bis unzureichend | D |

| | | | |
|---|---|---|---|
| ** im Vergleich zum mittleren ΔE der nicht erfindungsgemäßen Beispiele* | | | |

### Methode zur Bewertung der Stabilität der koloristischen Eigenschaften

Um die Änderung der spektralen Eigenschaften, die die koloristischen Eigenschaften eines Farbstoffes bestimmen, zu ermitteln, wurden die Absorptionsspektren vor und nach der lichtinduzierten Aushärtung der eingefärbten Harze verglichen.

Die wie zuvor beschrieben hergestellten eingefärbten Harze wurden in eine Quarzglasküvette mit einer Breite von 1 cm gefüllt. Daraufhin wurden Absorptionsspektren in Transmission mit dem Gerät x-Rite Ci7800 (X-Rite GmbH, Planegg-Martinsried, Deutschland) im Wellenlängenbereich von 360 - 750 nm aufgenommen. Diese wurden um die Absorption des entsprechenden nicht eingefärbten Harzes korrigiert, indem die selbe Messung mit dem nicht eingefärbten Harz durchgeführt wurde. Analog dazu wurden die Absorptionsspektren in Transmission von den eingefärbten Prüfkörpern aufgenommen und korrigiert. Die Spektren wurden jeweils auf die Schichtdicke der Küvette bzw. des Prüfkörpers normiert.

Dann wurde die Ähnlichkeit der Absorptionsspektren vor und nach dem 3D Druck aus den Messdaten berechnet. Dazu wurde der Korrelationskoeffizient R der normierten Absorption (Spektralintervall 10 nm) berechnet. Je größer R war, desto größer war die Ähnlichkeit der Absorptionsspektren und damit desto stabiler die koloristischen Eigenschaften des Farbstoffes beim 3D Druck.

**Tab.3: Bewertung der Stabilität bzw. Erhaltung der koloristischen Eigenschaften**

| **R** | **Bewertung** | **Kürzel** |
|---|---|---|
| 0,9 - 1 | Hervorragende Erhaltung | A |
| 0,7 - < 0,9 | Gut erhalten | B |
| 0,6 - < 0,7 | Überwiegend erhalten | C |
| 0 - < 0,6 | Auffällige Farbabweichung, unzureichend | D |

Die Herstellung und Prüfung der eingefärbten 3D Drucke erfolgte nach den oben beschriebenen Methoden in drei Harzzusammensetzungen mit unterschiedlichen Eigenschaften (siehe Materialien). In Harzzusammensetzung 1 wurden außerdem exemplarisch Farbstoffgemische untersucht.

**Tab.4: Erfindungsgemäße Beispiele roter Perinonfarbstoffe in Harzzusammensetzung 1**

| **Farbstoff** | **ΔE in %** | **Bewertung Belichtung** | **R** | **Bewertung R** |
|---|---|---|---|---|
| Solvent Red 135 | 3,4 | A | 0,72 | B |
| Solvent Red 179 | 2,3 | A | 0,90 | A |

**Tab.5: Nicht erfindungsgemäße Beispiele verschiedener roter Farbstoffe in Harzzusammensetzung 1**

| **Farbstoff** | **ΔE in %** | **Bewertung Belichtung** | **R** | **Bewertung R** |
|---|---|---|---|---|
| Solvent Red 52 | 30,2 | D | < 0,01 | D |
| Solvent Red 149 | 34,7 | D | < 0,01 | D |
| Solvent Red 23 | 43,4 | D | 0,71 | B |

**Tab.6: Erfindungsgemäße Beispiele roter Perinonfarbstoffe in Harzzusammensetzung 2**

| **Farbstoff** | **ΔE in %** | **Bewertung Belichtung** | **R** | **Bewertung R** |
|---|---|---|---|---|
| Solvent Red 135 | 3,1 | A | 0,89 | B |
| Solvent Red 179 | 2,7 | A | 0,90 | A |

**Tab.7: Nicht erfindungsgemäße Beispiele verschiedener roter Farbstoffe in Harzzusammensetzung 2**

| **Farbstoff** | **ΔE in %** | **Bewertung Belichtung** | **R** | **Bewertung R** |
|---|---|---|---|---|
| Solvent Red 52 | 31,0 | C | 0,21 | D |
| Solvent Red 149 | 37,3 | C | 0,16 | D |
| Solvent Red 23 | 39,8 | C | 0,67 | C |

**Tab.8: Erfindungsgemäße Beispiele roter Perinonfarbstoffe in Harzzusammensetzung 3**

| **Farbstoff** | **ΔE in %** | **Bewertung Belichtung** | **R** | **Bewertung R** |
|---|---|---|---|---|
| Solvent Red 135 | 3,5 | A | 0,83 | B |
| Solvent Red 179 | 1,8 | A | 0,91 | A |

**Tab.9: Nicht erfindungsgemäße Beispiele in verschiedener Farbstoffe in Harzzusammensetzung 3**

| **Farbstoff** | **ΔE in %** | **Bewertung Belichtung** | **R** | **Bewertung R** |
|---|---|---|---|---|
| Solvent Red 52 | 29,4 | C | 0,25 | D |
| Solvent Red 149 | 31,2 | C | 0,13 | D |
| Solvent Red 23 | 39,7 | C | 0,73 | B |

### Edukte

**Tab. 10: Einsatzmaterialien und Bezugsquellen**

| **Material** | **Beschreibung** | **Bezugsquelle** |
|---|---|---|
| 3D Printing UV Sensitive Resin Clear (bezeichnet als **Harzzusammensetzung 1**) | Farbloses Harz für den lichtinduzierten 3D Druck mit hoher Druckgeschwindigkeit (30 - 60 % Polyurethanacrylate CAS 82116-59-4; 10 - 40 % Isooctylacrylat CAS 29590-42-9; 2 - 5 % Photoinitiator) | Shenzhen Anycubic Technology Co., Ltd |
| Addigy^{®} LPU Rigid 341-02 IM (bezeichnet als **Harzzusammensetzung 2**) | Farbloses aliphatisches Polyetherurethanacrylatharz für den lichtinduzierten 3D Druck, optimiert für hohe mechanische Beanspruchung und Festigkeit (< 25 % Isobornylmethacrylat CAS 7534-94-3; ca. 10 % 4-(1-Oxo-2-propenyl)morpholin CAS 5117-12-4; < 0,15 % Methacrylsäure CAS 79-41-4 / 2-Hydroxyethylmethacrylat CAS 868-77-9) | Covestro Deutschland AG |
| Ultracur3D^{®} FL 300 (bezeichnet als **Harzzusammensetzung 3**) | Farbloses reaktives Urethanacrylatharz für den lichtinduzierten 3D Druck, optimiert für hohe Torsionsflexibilität und hohe Reißfestigkeit (1 - 3 % Diphenyl(2,4,6-trimethylbenzoyl)phosphinoxid CAS 75980-60-8; 15 - 20 % Isodecylacrylat CAS 1330-61-6; 5 - 10 % exo-1,7,7-Trimethylbicyclo[2.2.1]hept-2-ylacrylat CAS 5888-33-5; 25 - 50 % 2-Oxazolidinone, 3-ethenyl-5-methyl- CAS 3395-98-0) | BASF 3D Printing Solutions GmbH |
| 8,9,10,11-Tetrachlor-12H-phthaloperin-12-on | Perinonfarbstoff, C.I. Solvent Red 135, CAS No. 20749-68-2 | Lanxess Deutschland GmbH |
| 14H-Benz[4,5]isoquino[2,1-a]perimidin-14-on | Perinonfarbstoff, C.I. Solvent Red 179, CAS No. 6829-22-7 | Lanxess Deutschland GmbH |
| 6-(cyclohexylamino)-3-methyl-3H-dibenz[f, ij]isoquinoline-2,7-dione | Anthrachinonfarbstoff, C.I. Solvent Red 149, CAS No. 71902-18-6 | Alfa Chemistry |
| 3-Methyl-6-(p-toluidino)-3H-dibenz[f, ij]isoquinoline-2,7-dione | Anthrachinonfarbstoff, C.I. Solvent Red 52, CAS No. 81-39-0 | abcr GmbH |
| 1-[[p-Phenylazo]phenyl]azo-2-naphthol | Azofarbstoff, C.I. Solvent Red 23, CAS No. 85-86-9 | Haining Hongyu Chemical Co., Ltd |

## Patentansprüche

1. 3D Druckerzeugnisse mit einem Farbabstand ΔE <20 von den L*a*b* Koordinaten einer mit "3" beginnenden Farbnummer der RAL-Farbtabelle basierend auf fotopolymerisierbaren Zusammensetzungen enthaltend wenigstens ein Urethanacrylatharz und darin gelöst wenigstens einen roten Perinonfarbstoff auszuwählen aus 8,9,10,11-Tetrachlor-12H-phthaloperin-12-on und/oder 14H-Benz[4,5]isoquino[2,1-a]perimidin-14-on, wobei der Farbabstand ΔE gemäß der Beschreibung bestimmt wird.

2. 3D Druckerzeugnisse gemäß Anspruch 1, **dadurch gekennzeichnet, dass** das fotopolymerisierbare Urethan Basisharz auf Urethanacrylat, Polyurethanacrylat oder Polyetherurethanacrylat basiert.

3. 3D Druckerzeugnisse gemäß Anspruch 1 oder 2, **dadurch gekennzeichnet, dass** auf 20 bis 99,995 Massenanteile Urethanacrylat-basiertem Harz 0,005 bis 5 Massenanteile des wenigstens einen roten Perinonfarbstoffs eingesetzt werden.

4. 3D Druckerzeugnisse gemäß Anspruch 3, **dadurch gekennzeichnet, dass** zusätzlich zum wenigstens einen roten Perinonfarbstoff noch 0,5 - 10 Massenanteile Fotoinitiator eingesetzt wird.

5. 3D Druckerzeugnisse gemäß Anspruch 4, **dadurch gekennzeichnet, dass**, der Fotoinitiator im Wellenlängenbereich von 300 bis 450 nm absorbiert.

6. 3D Druckerzeugnisse gemäß der Ansprüche 4 oder 5, **dadurch gekennzeichnet, dass** zusätzlich zum wenigstens einen roten Perinonfarbstoff und zu den 0,5 - 10 Massenanteilen Fotoinitiator 0,001 - 1 Massenanteile wenigstens eines Additivs eingesetzt werden.

7. 3D Druckerzeugnisse gemäß Anspruch 6, **dadurch gekennzeichnet, dass** das Additiv wenigstens ein Egalisiermittel, wenigstens ein Stabilisator, wenigstens ein zusätzlicher Farbstoff verschieden vom roten Perinonfarbstoff, wenigstens ein Füllstoff oder wenigstens ein organisches Pigment ist.

8. 3D Druckerzeugnisse gemäß einem oder mehrere der Ansprüche 1 bis 7, **dadurch gekennzeichnet, dass** diese auf fotopolymerisierbarem 3D Druck mittels SLA-3D-Drucker oder DLP-3D-Drucker basieren.

9. Verwendung wenigstens eines roten Perinonfarbstoffs auszuwählen aus 8,9,10,11-Tetrachlor-12H-phthaloperin-12-on und/oder 14H-Benz[4,5]isoquino[2,1-a]perimidin-14-on gelöst vorliegend zur Steigerung der nach DIN EN ISO 4892-2 zu bestimmenden Lichtechtheit und koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "3" beginnenden Farbnummer der RAL-Farbtabelle, wobei der Farbabstand ΔE gemäß der Beschreibung bestimmt wird.

10. Verwendung gemäß Anspruch 9 **dadurch gekennzeichnet, dass** der Einsatz des wenigstens einen Perinonfarbstoffs in der additiven Fertigung von 3D Druckerzeugnissen im auf Fotopolymerisation basierenden 3D Druck vorgesehen ist.

11. Verwendung gemäß Anspruch 9 oder 10, **dadurch gekennzeichnet, dass** die Urethanacrylatharz basierten Zusammensetzungen auf Urethanacrylat, auf Polyurethanacrylat oder auf Polyetherurethanacrylat basieren.

12. Verfahren zur Steigerung der nach DIN EN ISO 4892-2 zu bestimmenden Lichtechtheit und koloristischen Eigenschaften fotopolymerisierbarer, Urethanacrylatharz-basierter Zusammensetzungen und daraus herzustellender 3D Druckerzeugnisse mit einem Farbabstand ΔE <20 von den L*a*b* Koordinaten mit "3" beginnenden Farbnummer der RAL-Farbtabelle, **dadurch gekennzeichnet, dass** wenigstens ein roter Perinonfarbstoff auszuwählen aus 8,9,10,11-Tetrachlor-12H-phthaloperin-12-on und/oder 14H-Benz[4,5]isoquino[2,1-a]perimidin-14-on in der Urethanacrylatharz-basierter Zusammensetzungen gelöst vorliegt, wobei der Farbabstand ΔE gemäß der Beschreibung bestimmt wird.

13. Verfahren gemäß Anspruch 12, **dadurch gekennzeichnet, dass** der Einsatz des wenigstens einen roten Perinonfarbstoffs in der additiven Fertigung von 3D Druckerzeugnissen im auf Fotopolymerisation basierten 3D Druck erfolgt.

14. Verfahren gemäß Anspruch 12 oder 13, **dadurch gekennzeichnet, dass** die Urethanacrylatharz basierten Zusammensetzungen auf Urethanacrylat, auf Polyurethanacrylat oder auf Polyetherurethanacrylat basieren.

## Claims

1. 3D-printed products having a colour distance ΔE < 20 from the L*a*b* coordinates for a colour number, beginning with "3", of the RAL colour chart, based on photopolymerizable compositions comprising at least one urethane acrylate resin and, dissolved therein, at least one red perinone dye to be selected from 8,9,10,11-tetrachloro-12H-phthaloperin-12-one and/or 14H-benz[4,5]isoquino[2,1-a]perimidin-14-one, wherein the colour distance ΔE is determined according to the description.

2. 3D-printed products according to Claim 1, **characterized in that** the photopolymerizable urethane base resin is based on urethane acrylate, polyurethane acrylate or polyether urethane acrylate.

3. 3D-printed products according to Claim 1 or 2, **characterized in that** 0.005 to 5 parts by mass of the at least one red perinone dye are used per 20 to 99.995 parts by mass of urethane-acrylate-based resin.

4. 3D-printed products according to Claim 3, **characterized in that**, in addition to the at least one red perinone dye, 0.5-10 parts by mass of photoinitiator are also employed.

5. 3D-printed products according to Claim 4, **characterized in that** the photoinitiator absorbs in the 300 to 450 nm wavelength range.

6. 3D-printed products according to Claim 4 or 5, **characterized in that**, in addition to the at least one red perinone dye and the 0.5-10 parts by mass of photoinitiator, 0.001-1 parts by mass of at least one additive are employed.

7. 3D-printed products according to Claim 6, **characterized in that** the additive is at least one levelling agent, at least one stabilizer, at least one additional dye different from the red perinone dye, at least one filler or at least one organic pigment.

8. 3D-printed products according to one or more of Claims 1 to 7, **characterized in that** they are based on photopolymerizable 3D printing using a SLA 3D printer or DLP 3D printer.

9. Use of at least one red perinone dye to be selected from 8,9,10,11-tetrachloro-12H-phthaloperin-12-one and/or 14H-benz[4,5]isoquino[2,1-a]perimidin-14-one, present in dissolved form, for increasing the lightfastness and colouristic properties, to be determined according to DIN EN ISO 4892-2, of photopolymerizable urethane-acrylate-resin-based compositions and 3D-printed products to be produced therefrom having a colour distance ΔE < 20 from the L*a*b* coordinates for a colour number, beginning with "3", of the RAL colour chart, wherein the colour distance ΔE is determined according to the description.

10. Use according to Claim 9, **characterized in that** the use of the at least one perinone dye in the additive manufacture of 3D-printed products is provided for in photopolymerization-based 3D printing.

11. Use according to Claim 9 or 10, **characterized in that** the urethane-acrylate-resin-based compositions are based on urethane acrylate, on polyurethane acrylate or on polyether urethane acrylate.

12. Method for increasing the lightfastness and colouristic properties, to be determined according to DIN EN ISO 4892-2, of photopolymerizable urethane-acrylate-resin-based compositions and 3D-printed products to be produced therefrom having a colour distance ΔE < 20 from the L*a*b* coordinates for a colour number, beginning with "3", of the RAL colour chart, **characterized in that** at least one red perinone dye to be selected from 8,9,10,11-tetrachloro-12H-phthaloperin-12-one and/or 14H-benz[4,5]isoquino[2,1-a]perimidin-14-one is present in dissolved form in urethane-acrylate-resin-based compositions, wherein the colour distance ΔE is determined according to the description.

13. Method according to Claim 12, **characterized in that** the use of the at least one red perinone dye in the additive manufacture of 3D-printed products takes place in photopolymerization-based 3D printing.

14. Method according to Claim 12 or 13, **characterized in that** the urethane-acrylate-resin-based compositions are based on urethane acrylate, on polyurethane acrylate or on polyether urethane acrylate.

## Revendications

1. Produits imprimés 3D ayant un écart de couleur ΔE < 20 par rapport aux coordonnées L*a*b* d'un numéro de couleur commençant par « 3 » du nuancier RAL, à base de compositions photopolymérisables contenant au moins une résine acrylate d'uréthane et, dissoute dans celle-ci, au moins un colorant périnone rouge à sélectionner parmi la 8,9,10,11-tétrachloro-12H-phtalopérin-12-one et/ou la 14H-benz[4,5]isoquino[2,1-a]périmidine-14-one, l'écart ΔE étant déterminé selon la description.

2. Produits imprimés en 3D selon la revendication 1, **caractérisés en ce que** la résine de base d'uréthane photopolymérisable est à base d'acrylate d'uréthane, d'acrylate de polyuréthane ou d'acrylate de polyétheruréthane.

3. Produits imprimés en 3D selon la revendication 1 ou 2, **caractérisés en ce que** l'on utilise, pour 20 à 99,995 parties en masse, de résine à base d'acrylate d'uréthane, 0,005 à 5 parties en masse de l'au moins un colorant périnone rouge.

4. Produits imprimés en 3D selon la revendication 3, **caractérisés en ce que**, en plus de l'au moins un colorant périnone rouge, 0,5 à 10 parties en masse de photoinitiateur sont utilisées.

5. Produits imprimés en 3D selon la revendication 4, **caractérisés en ce que** le photoinitiateur absorbe dans la gamme de longueurs d'onde allant de 300 à 450 nm.

6. Produits imprimés en 3D selon la revendication 4 ou 5, **caractérisés en ce que** l'on utilise, en plus de l'au moins un colorant périnone rouge et des 0,5 à 10 parties en masse de photoinitiateur, 0,001 à 1 partie en masse d'au moins un additif.

7. Produits imprimés en 3D selon la revendication 6, **caractérisés en ce que** l'additif est au moins un agent de nivellement, au moins un stabilisant, au moins un colorant supplémentaire différent du colorant périnone rouge, au moins une charge ou au moins un pigment organique.

8. Produits imprimés 3D selon une ou plusieurs des revendications 1 à 7, **caractérisés en ce qu'**ils sont basés sur une impression 3D photopolymérisable au moyen d'une imprimante SLA-3D ou d'une imprimante DLP-3D.

9. Utilisation d'au moins un colorant périnone rouge à choisir parmi la 8,9,10,11-tétrachloro-12H-phtalopérin-12-one et/ou la 14H-benz[4,5]isoquino[2,1-a]périmidine-14-one, qui est présente dissoute, pour augmenter la résistance à la lumière et les propriétés colorantes, à déterminer selon la norme DIN EN ISO 4892-2, de compositions photopolymérisables à base de résine d'acrylate d'uréthane et produits imprimés 3D à produire à partir de celles-ci ayant un écart de couleur ΔE < 20 par rapport aux coordonnées L*a*b* d'un numéro de couleur commençant par « 3 » du nuancier RAL, l'écart de couleur ΔE étant déterminé selon la description.

10. Utilisation selon la revendication 9, **caractérisée en ce que** l'utilisation de l'au moins un colorant périnone dans la fabrication additive de produits imprimés 3D est prévue dans l'impression en 3D basée sur une photopolymérisation.

11. Utilisation selon la revendication 9 ou 10, **caractérisée en ce que** les compositions à base d'acrylate d'uréthane sont à base d'acrylate d'uréthane, d'acrylate de polyuréthane ou d'acrylate de polyétheruréthane.

12. Procédé pour augmenter la résistance à la lumière et les propriétés colorantes, à déterminer selon la norme DIN EN ISO 4892-2, de compositions photopolymérisables à base de résine acrylate d'uréthane et de produits imprimés en 3D à produire à partir de ces compositions ayant un écart de couleur ΔE < 20 par rapport aux coordonnées L*a*b* d'un numéro de couleur commençant par « 3 » du nuancier RAL, **caractérisé en ce que** qu'au moins un colorant périnone rouge choisi parmi la 8,9,10,11-tétrachloro-12H-phtalopérin-12-one et/ou la 14H-benz[4,5]isoquino[2,1-a]périmidine-14-one est dissous dans les compositions à base de résine acrylate d'uréthane, l'écart de couleur ΔE étant déterminé selon la description.

13. Procédé selon la revendication 12, **caractérisé en ce que** l'utilisation de l'au moins un colorant périnone rouge dans la fabrication additive de produits imprimés en 3D est effectuée dans une impression en 3D basée sur une photopolymérisation.

14. Procédé selon la revendication 12 ou 13, **caractérisé en ce que** les compositions à base d'acrylate d'uréthane sont à base d'acrylate d'uréthane, d'acrylate de polyuréthane ou d'acrylate de polyétheruréthane.
